# FASCICULE DE BREVET EUROPEEN

(11) **EP 4 402 050 B1**
(45) Date de publication et mention de la délivrance du brevet: **25.06.2025**
(21) Numéro de dépôt: 22782911.6
(22) Date de dépôt: 05.09.2022
(51) Int. Cl.: B64C 11/06, B64C 11/30, F16C 19/50, F16C 19/18

(54) **HÉLICE POUR UNE TURBOMACHINE D'AÉRONEF**
PROPELLER FÜR EINE FLUGZEUGTURBOMASCHINE
PROPELLER FOR AN AIRCRAFT TURBOMACHINE

(30) Priorité: 13.09.2021 FR 2109565
(43) Date de publication de la demande: 24.07.2024
(73) Titulaire: SAFRAN AIRCRAFT ENGINES, 75015 Paris (FR)
(72) Inventeur: SERVANT, Régis Eugène Henri, 77550 MOISSY-CRAMAYEL (FR); COTTET, Clément, 77550 MOISSY-CRAMAYEL (FR); GAUTIER, Mathias, 77550 MOISSY-CRAMAYEL (FR)
(74) Mandataire: Gevers & Orès
(86) Numéro de dépôt international: PCT/FR2022/051664
(87) Numéro de publication internationale: WO 2023/037063

(56) Documents cités:
- US-A- 1 806 385
- US-A- 5 427 458
- US-A1- 2006 093 486
- US-A1- 2013 336 796
- US-A1- 2017 101 171

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de l'art comprend notamment les documents FR-A1-3 017 163, FR-A1-3 080 322, US-A1-2013/336796, US-A1-2006/093486, US-A-1806385, US-A-4427458 et US-A1-2017/1011 71.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes. Or l'augmentation du BPR va de pair avec la réduction du FPF (*Fan Pressure Ratio*). Par conséquent, un système de changement de pas (aube à calage variable) est généralement requis pour que l'hélice soit opérable sur tout le domaine de vol.

Il existe plusieurs technologies d'attache d'une aube d'hélice à calage variable et plusieurs technologies de commande du calage angulaire d'une aube d'hélice de ce type.

Une hélice comprend en général un moyeu qui porte des systèmes de commande du calage angulaire de ses aubes. Le moyeu a une forme générale annulaire ou polygonale autour d'un premier axe qui est l'axe longitudinal de la turbomachine, et comprend des orifices répartis autour de ce premier axe et dans lesquels sont logés les systèmes de commande.

Chacun de ces orifices a une orientation sensiblement radiale par rapport au premier axe et reçoit un système de commande ainsi que des paliers de guidage du système de commande autour d'un second axe radial par rapport au premier axe, et qui est un axe de calage de l'aube correspondante.

Dans le cadre de la présente invention, le système de commande comprend une aube comportant une pale reliée à un pied, un bol comportant un logement interne de réception du pied de l'aube, et des éléments de fixation et de solidarisation en rotation du pied de l'aube vis-à-vis du bol.

Le système de commande est logé dans l'orifice du moyeu et des paliers à billes sont montés autour du pied de l'aube, entre des extrémités du bol et le moyeu.

Dans certaines configurations, les orifices du moyeu destinés à recevoir les systèmes de commande sont traversants en direction radiale de façon à autoriser le montage de l'hélice et en particulier des paliers de guidage selon une cinématique particulière.

Selon cette cinématique, un palier à billes est monté autour du pied de l'aube, entre une extrémité radialement interne du bol et le moyeu, depuis l'intérieur du moyeu, et un autre palier à billes est monté autour du pied de l'aube, entre une extrémité radialement externe du bol et le moyeu, depuis l'extérieur du moyeu.

Le montage du palier à billes intérieur nécessite un déplacement du bol à l'intérieur de l'orifice du moyeu, le long de l'axe de calage de l'aube, qui est appelé « course de montage », et qui a un impact sur l'intégration du pied d'aube, et par conséquent sur le rapport de moyeu de la veine aérodynamique (ratio entre le rayon de veine en pied d'aube et le rayon de veine en tête d'aube). Pour optimiser les performances du moteur, le rapport de moyeu doit être le plus faible possible. Il faut donc que cette course de montage soit également la plus faible possible.

Le palier de guidage extérieur est en général configuré pour reprendre les moments appliqués au système de commande en fonctionnement, et le palier de guidage intérieur est en général configuré pour reprendre les forces centrifuges appliquées au système de commande en fonctionnement. Pour ces raisons, le palier de guidage situé radialement à l'intérieur est en général surdimensionné par rapport à l'autre palier de guidage, c'est-à-dire qu'il comprend des billes qui ont un diamètre supérieur au diamètre des billes de l'autre palier de guidage.

Cette configuration entraîne des inconvénients. Plus le diamètre des billes est important, plus la course de montage précitée est importante, et plus le bol doit être rallongé pour autoriser ce montage. Le rallongement du bol est problématique car cela augmente son encombrement ainsi que la masse du système de commande et donc de la turbomachine.

Par ailleurs, les efforts centrifuges appliqués à l'hélice sont très importants en fonctionnement, de l'ordre de plusieurs dizaines de tonnes pour chaque aube. Le dimensionnement du palier intérieur (augmentation du diamètre et nombre de billes) entraine alors des dimensions de palier qui ne sont pas intégrables dans le rapport de moyeu spécifié. En effet, à nombre d'aubes fixé, la proximité entre les paliers intérieurs de deux aubes adjacentes, impose de devoir les éloigner de l'axe moteur lorsque leurs dimensions augmentent. Cela nécessite de surdimensionner tous les éléments qui se trouvent autour d'eux, c'est-à-dire toute la zone du pied d'aube et donc la veine, ce qui pénalise le rapport de moyeu du moteur et donc ses performances. De plus, plus les paliers sont éloignés de l'axe de l'hélice, plus les efforts centrifuges augmentent, et plus ces paliers doivent être surdimensionnés et sont donc encombrants.

Il existe donc un besoin d'une solution qui permettrait de résoudre tout ou partie des problèmes évoqués dans ce qui précède.

### Résumé de l'invention

L'invention concerne une hélice pour une turbomachine d'aéronef, cette hélice comportant ;
- un moyeu s'étendant autour d'un premier axe et comportant des orifices répartis autour de ce premier axe, chacun de ces orifices ayant une orientation sensiblement radiale par rapport audit premier axe et traversant ledit moyeu,
- un système de commande du calage angulaire d'une aube qui est monté dans chacun desdits orifices, et
- des paliers de guidage du système de commande qui sont montés dans chacun desdits orifices,

ledit système de commande comprenant :
   + une aube comportant une pale reliée à un pied, l'aube comportant un axe de calage sensiblement radial par rapport audit premier axe,
   + un bol s'étendant autour dudit axe de calage, le bol comportant un logement interne de réception du pied de l'aube, et
   + des éléments de fixation et de solidarisation en rotation du pied de l'aube vis-à-vis du bol,
lesdits paliers de guidage comprenant :
   * un premier palier à billes qui s'étend autour dudit axe de calage et dudit pied, entre une extrémité radialement externe dudit bol et ledit moyeu, et
   * un second palier à billes qui s'étend autour dudit axe de calage et dudit pied, entre une extrémité radialement interne dudit bol et ledit moyeu, caractérisé en ce que ledit second palier à billes comprend deux rangées annulaires de billes qui sont coaxiales et à contacts obliques, une première
   de ses rangées ayant un premier diamètre et une seconde de ces rangées ayant un second diamètre plus petit que le premier diamètre, au moins un plan perpendiculaire audit axe de calage passant par les première et seconde rangées de billes.

L'invention propose ainsi d'utiliser un second palier à deux rangées de billes plutôt qu'à une seule rangée de billes. Ceci permet de réduire le diamètre des billes du second palier. En effet, chacune des billes d'un palier à une seule rangée de billes peut être remplacée par une bille plus petite d'un palier à deux rangées de billes. La réduction du diamètre des billes est avantageuse pour autoriser le montage du système de commande selon la cinématique précitée et qui sera détaillée dans ce qui suit, sans impacter l'encombrement de ce système.

Le remplacement d'une rangée de billes par deux rangées de billes coaxiales risque d'augmenter la dimension axiale du palier. Pour tenir compte de cette problématique, l'invention propose d'une part d'utiliser des rangées de billes à contacts obliques et d'autre part de rapprocher le plus possible les rangées de billes l'une de l'autre. Pour cela, les rangées de billes ont des diamètres différents et sont traversées par au moins un plan perpendiculaire à l'axe de calage de l'aube. On comprend ainsi que les rangées de billes sont directement superposées l'une sur l'autre, avec un entrefer axial nul le long de l'axe de calage, ou sont encastrées l'une dans l'autre le long de cet axe, ce qui permet d'optimiser l'encombrement du système.

En conclusion, l'invention peut permettre de remplacer un palier à une rangée de billes par un palier à deux rangées de billes sans forcément impacter la course de montage précitée et donc les dimensions du système de commande.

L'hélice selon l'invention peut comprendre une ou plusieurs des caractéristiques suivantes, prises isolément les unes des autres, ou en combinaison les unes avec les autres :
- la seconde rangée de billes est au moins en partie engagée dans la première rangée de billes ;
- la seconde rangée de billes est intercalée entre la première rangée de billes et le premier palier à billes ;
- le second palier comprend une bague interne formée d'une seule pièce avec ledit bol et une bague externe rapportée et fixée dans l'orifice du moyeu, chacune de ces bagues comportant un premier chemin de roulement de la première rangée de billes et un second chemin de roulement de la seconde rangée de billes ;
- ladite bague externe est montée sur une surface annulaire interne du moyeu et est en appui axial sur une portée cylindrique de ce moyeu, directement ou par l'intermédiaire d'une cale annulaire ;
- ladite bague externe du second palier est formée d'une seule pièce ;
- ledit bol a une forme générale de diabolo et comprend un rétrécissement annulaire entre lesdites extrémités ;
- chacun des orifices du moyeu comprend un rebord annulaire interne qui est destiné à être situé au niveau dudit rétrécissement et/ou qui porte ladite portée cylindrique, ce rebord interne comportant un diamètre interne qui correspond au diamètre interne minimal dudit orifice et qui est supérieur au diamètre externe maximal de ladite extrémité radialement interne du bol ;
- le diamètre externe maximal de ladite extrémité radialement interne du bol est inférieur ou égal au diamètre interne minimal de ladite bague externe ;
- les billes desdites première et seconde rangées de billes ont des diamètres identiques ;
- les billes de chacune desdites première et seconde rangées de billes sont maintenues par une cage annulaire qui comprend un rebord annulaire configuré pour être mis en prise avec un outil de montage de la rangée de billes ;
- le rebord annulaire comprend une rangée annulaire d'orifices traversants ;
- ledit bol comporte une paroi annulaire comportant une extrémité radialement interne fermée par une paroi de fond, et une extrémité radialement externe ouverte et configurée pour autoriser le montage du pied de l'aube à l'intérieur du bol, la paroi de fond comprenant un évidement ayant une section transversale non circulaire et configuré pour recevoir une extrémité libre de forme complémentaire dudit pied de façon à ce que le bol soit solidarisé en rotation avec le pied autour dudit axe.

La présente invention concerne également une turbomachine, en particulier d'aéronef, comportant au moins une hélice telle que décrite ci-dessus.

La présente invention concerne enfin un procédé de montage d'une hélice telle que décrite ci-dessus, dans lequel il comprend les étapes de :
a) insertion du bol dans l'orifice du moyeu, radialement de l'extérieur vers l'intérieur par rapport audit premier axe,,
b) montage des première et seconde rangées annulaires de billes du second palier de guidage entre l'extrémité radialement interne du bol et le moyeu, et
c) montage d'au moins une partie du premier palier de guidage entre l'extrémité radialement externe du bol et le moyeu.

Le procédé peut comprendre, avant l'étape a), le montage par frettage d'une bague externe du second palier de guidage dans l'orifice du moyeu. Avantageusement, les rangées de billes du second palier de guidage sont montées les unes après les autres à l'étape a), au moyen d'un outil de montage qui est mis en prise avec chacune de ces rangées. Avantageusement, une bague externe du premier palier de guidage est montée dans l'orifice du moyeu avant l'étape a) puis des billes et une bague interne de ce palier sont montées entre l'extrémité radialement externe du bol et le moyeu lors de l'étape c).

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une aube d'hélice pour une turbomachine d'aéronef,
[Fig.2] la figure 2 est une vue à plus grande échelle d'une partie de la figure 1 et montre le pied de l'aube,
[Fig.3] la figure 3 est une vue schématique en coupe transversale d'une hélice et d'un système de calage angulaire d'une aube de cette hélice,
[Fig.4] la figure 4 est une vue schématique en coupe transversale d'une hélice et d'un système de calage angulaire d'une aube de cette hélice, selon un mode de réalisation de la présente invention,
[Fig.4a] la figure 4a est une vue à plus grande échelle d'un détail de la figure 4,
[Fig.5] la figure 5 est une vue schématique en perspective d'une rangée de billes d'un palier de guidage de l'hélice de la figure 4,
[Fig.6] la figure 6 est une vue schématique partielle en coupe du moyeu et d'un bol du système de commande de la figure 4, et illustre une étape d'un procédé de montage de l'hélice,
[Fig.7] la figure 7 est une vue similaire à celle de la figure 6 et illustre une autre étape du procédé,
[Fig.8] la figure 8 est une vue similaire à celle de la figure 6 et illustre une autre étape du procédé,
[Fig.9] la figure 9 est une vue similaire à celle de la figure 6 et illustre une autre étape du procédé,
[Fig.10] la figure 10 est une vue similaire à celle de la figure 6 et illustre une autre étape du procédé, et
[Fig.11] la figure 11 est une vue similaire à celle de la figure 6 et illustre une autre étape du procédé.

### Description détaillée de l'invention

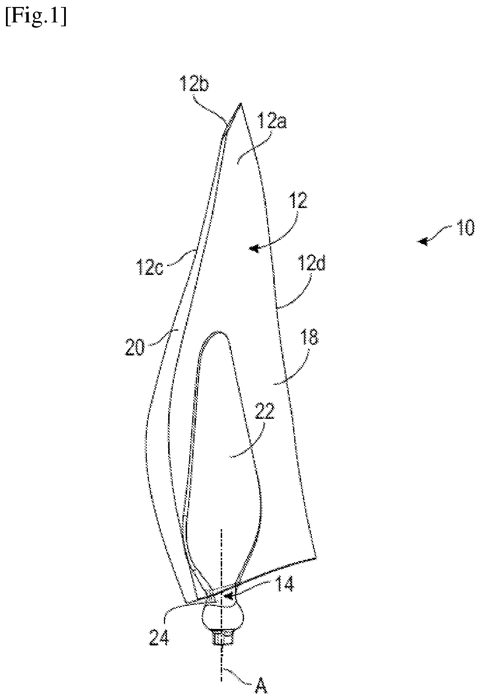

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*). Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22 qui comprend une partie formant une âme de la pale 12 et qui est destinée à être insérée dans la préforme 18 avant l'injection de résine, et une partie qui s'étend du côté opposé au sommet de la pale 14 pour former une partie du pied 14, appelé corps 24. Le longeron 22 est préférentiellement en matériau composite à matrice organique époxy renforcée par fibres de carbone tissées 3D avec la direction chaîne majoritairement orientée radialement et la trame majoritairement orientée selon la corde de la pale à hauteur de veine aérodynamique. Cependant, le longeron peut également être un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

On désigné par A, l'axe d'allongement de l'aube 10 et de la pale 12 et en particulier l'axe de calage de l'aube 10, c'est-à-dire l'axe autour duquel la position angulaire de l'aube est ajustée. C'est en général aussi un axe radial qui s'étend donc suivant un rayon par rapport à l'axe de rotation de l'hélice équipée de cette aube (qui est appelé premier axe et qui n'est pas visible dans les dessins).

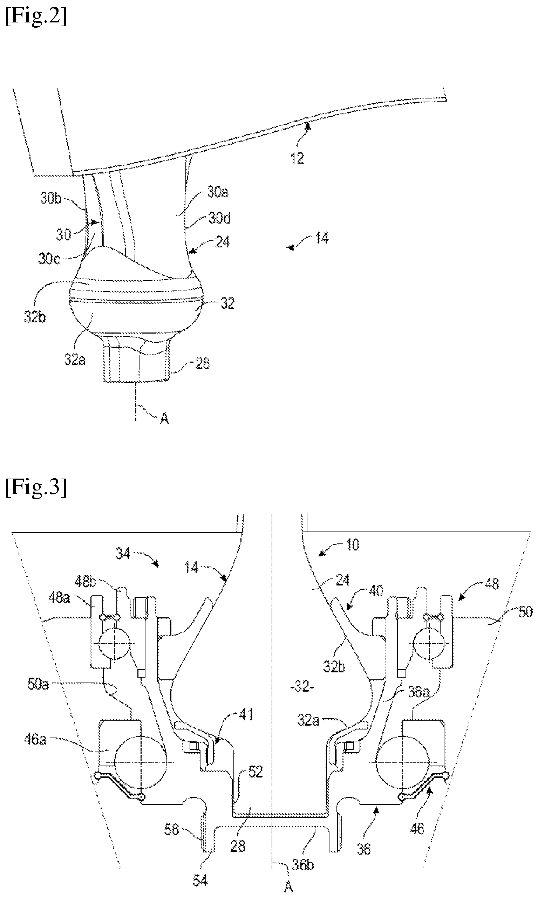

Le corps 24 du pied 14 a une forme particulière mieux visible aux figures 2 et 3.

Le corps 24 comprend pour l'essentiel trois parties à savoir :
- une extrémité libre 28 située du côté opposé à la pale 12,
- une échasse 30 située du côté de la pale 12, et
- un bulbe 32 situé entre l'extrémité libre 28 et l'échasse 30.

L'extrémité libre 28 a une forme générale parallélépipédique dans l'exemple représenté. Cette extrémité 28 est de préférence désaxée ou décalée par rapport à l'axe A pour réaliser un détrompage ou indexage.

L'échasse 30 peut avoir une forme relativement complexe et peut être considérée comme comportant :
- deux flancs latéraux 30a, 30b, situés respectivement du côté de l'intrados 12a et de l'extrados 12b de la pale 12, qui convergent l'un vers l'autre le long de l'axe A et en direction du sommet de la pale 12, et
- deux bords, respectivement amont 30c et aval 30d, qui au contraire divergent l'un de l'autre le long de l'axe A et en direction du sommet de la pale 12.

Le bulbe 32 a une forme générale renflée ou bombée, ce renflement ou bombement s'étendant tout autour de l'axe A.

Le bulbe 32 présente deux portées périphériques, respectivement inférieure 32a et supérieure 32b, qui s'étendent autour de l'axe A. Dans l'exemple représenté, du fait de la forme du bulbe, la portée inférieure 32a est orientée vers le bas (c'est-à-dire du côté opposé à la pale 12), radialement vers l'extérieur par rapport à l'axe A et radialement vers l'intérieur par rapport au premier axe de l'hélice, et la portée supérieure 32b est orientée vers le haut (c'est-à-dire du côté de la pale 12), radialement vers l'extérieur par rapport à l'axe A et radialement vers l'extérieur par rapport au premier axe de l'hélice.

La figure 3 illustre un système 34 de calage angulaire d'une aube 10 telle qu'illustrée aux figures 1 et 2.

Le système 34 comprend pour l'essentiel l'aube 10, un bol 36, et des éléments 40, 41 de fixation et de solidarisation en rotation du pied 14 de l'aube 10 vis-à-vis du bol 36.

Le bol 36 comporte une paroi annulaire 36a s'étendant autour de l'axe A. Cette paroi 36a comporte une extrémité axiale radialement interne par rapport au premier axe, qui est fermée par une paroi de fond 36b, et une extrémité axiale radialement externe qui est ouverte et configurée pour autoriser le montage du pied 14 de l'aube 10 à l'intérieur du bol 36. Il est considéré ici que l'axe A du bol 36 est celui de l'aube 10 et correspond à l'axe de la rotation pour le changement de calage angulaire de l'aube 10, cet axe A étant sensiblement radial par rapport au premier axe de l'hélice.

La paroi de fond 36b est configurée pour coopérer par complémentarité de formes avec l'extrémité libre du pied 14, et donc avec l'extrémité 28 du corps 24, de façon à ce que le bol 36 soit solidarisé en rotation avec le pied 14 autour de l'axe A.

Dans le cas présent, on comprend que la paroi de fond 36b comprend un évidement 52 ayant une section transversale non circulaire, et en particulier rectangulaire, et configuré pour recevoir l'extrémité 28 (figure 3). Cet évidement 52 est de préférence excentré par rapport à l'axe A de façon analogue à l'extrémité 28. Cet excentrement permet un indexage et un détrompage lors de l'insertion et du montage du pied 14 dans le bol 36, une seule position d'engagement de l'extrémité 28 dans l'évidement 52 étant possible.

L'évidement 52 est situé sur une face supérieure ou interne de la paroi de fond 36b du bol 36, qui est donc située à l'intérieur du bol 36 et orientée du côté du pied 14.

Le système 34 génère un couple au pied 14 d'aube qui s'oppose au moment de torsion issu des efforts aérodynamiques et des efforts centrifuges. La transmission des efforts entre le bol 36 et le pied 12 est directe, le moment de torsion s'appliquant directement sur le corps 24 du pied 14.

La paroi de fond 36b comprend une face inférieure ou externe, qui est située du côté opposé au pied 14, et qui comprend un prolongement cylindrique 54 s'étendant le long de l'axe A et comportant un filetage externe ou des cannelures rectilignes externes 56 pour l'accouplement en rotation du système avec un mécanisme de changement de pas qui n'est pas illustré et qui est commun aux différents systèmes 34 de l'hélice.

Un premier élément annulaire de fixation 41 est monté à l'intérieur du bol 36, à proximité de sa paroi de fond 36b. Ce premier élément 41 s'étend autour de l'axe A et est intercalé axialement (par rapport à l'axe A) entre le bol 36 et le pied 14 de l'aube 10. Ce premier élément 41 est fixé ou solidarisé au bol 36 par des moyens appropriés et prend appui sur la portée inférieure 32a du pied 14, tout autour de l'axe A. Ce premier élément 41 peut être configuré pour assurer une précharge du pied 14 de l'aube 10 à l'intérieur du bol, le long de l'axe A.

Un second élément annulaire de fixation 40 est monté à l'intérieur du bol 36, à proximité de son extrémité radialement externe. Ce second élément 40 s'étend autour de l'axe A et est intercalé radialement (par rapport à l'axe A) entre le bol 36 et le pied 14 de l'aube 10. Ce second élément 40 est fixé ou solidarisé au bol 36 par des moyens appropriés et prend appui sur la portée supérieure 32b du pied 14, tout autour de l'axe A. Ce second élément 40 peut être sectorisé pour autoriser son montage autour du pied 14. Ce second élément 40 peut être configuré pour assurer une rétention du pied 14 de l'aube 10 à l'intérieur du bol, le long de l'axe A.

Des paliers de guidage 46, 48 sont montés autour du bol 36, entre le bol 36 et un moyeu 50 de l'hélice. Bien que cela ne soit pas visible dans les dessins, le moyeu 50 s'étend autour de l'axe de rotation de l'hélice (premier axe) et peut avoir une forme générale annulaire ou polygonale.

Le moyeu 50 comprend des orifices 50a de montage des systèmes de commande 34 des aubes 10. Les orifices 50a sont répartis autour du premier axe et sont traversants en direction radiale comme illustré à la figure 3, c'est-à-dire qu'ils débouchent sur des faces périphériques interne et externe du moyeu 50.

Les paliers 46, 48 sont ici au nombre de deux et sont respectivement un palier radialement interne 46 et un palier radialement externe 48.

Les paliers 46, 48 sont du type à roulement à billes. Dans l'exemple représenté, ils ont des diamètres différents et leurs billes ont également des diamètres différents. Les paliers 46, 48 sont à contact oblique.

Le palier 46 s'étend sensiblement autour de la portée inférieure 32a et/ou de l'extrémité libre 28 du pied 14. Ce palier 46 a un diamètre plus petit que l'autre palier 48, et ses billes ont un diamètre supérieur à celles de l'autre palier 48.

Le moyeu 50 porte les bagues externes 46a, 48a des paliers 46, 48 et leurs bagues internes 48b sont portées par le bol 36 ou intégrées à ce dernier, comme c'est le cas dans l'exemple représenté de la bague interne du palier 46.

Les paliers 46, 48 assurent le centrage et le guidage du bol 36 autour de l'axe A vis-à-vis du moyeu 50. Le bol 36 sert donc de pivot pour l'aube 10, par rapport au moyeu 50.

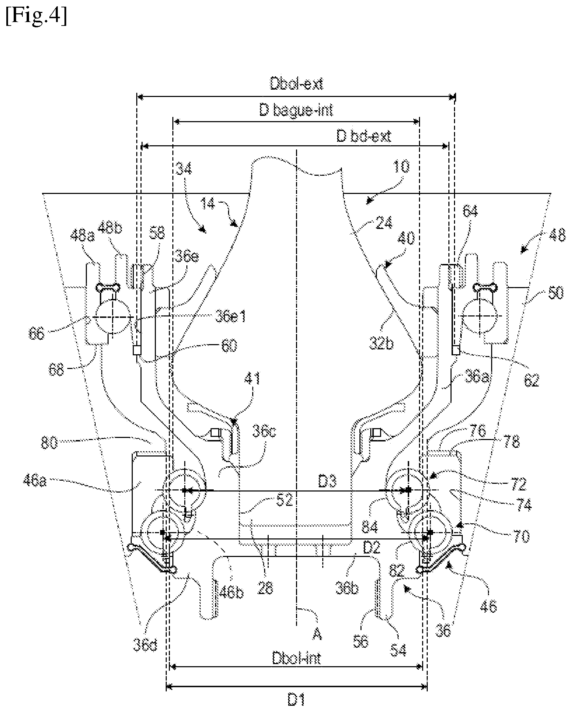

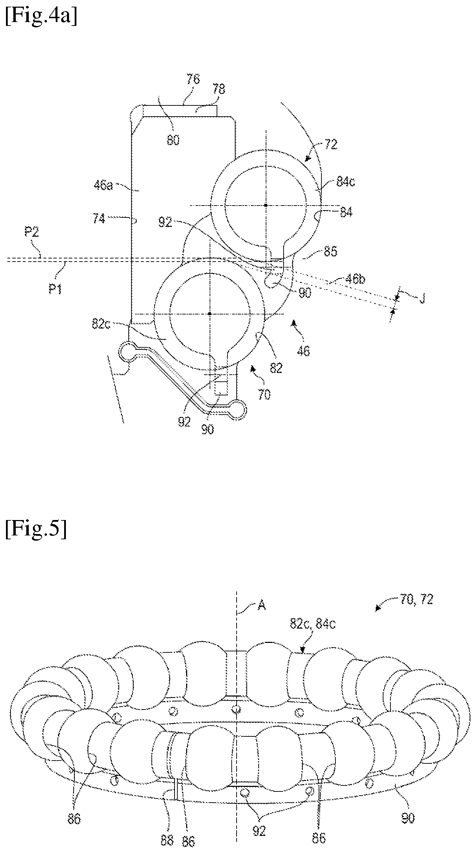

La présente invention propose un perfectionnement à la technologie décrite dans ce qui précède, un mode de réalisation de ce perfectionnement étant illustré à la figure 4.

L'aube 10 est similaire à celle décrite dans ce qui précède en relation avec les figures 1 à 3.

Les éléments de fixation 40, 41 du pied 14 de l'aube 10 dans le bol 36 sont similaires à ceux décrits en relation avec la figure 3. Il s'agit ici seulement d'un exemple non limitatif de réalisation de ces éléments de fixation 40, 41.

D'autres variantes sont envisageables mais ne seront pas décrites car elles ne concernent pas directement l'invention.

Le bol 36 est similaire à celui décrit dans ce qui précède en relation avec la figure 3. Le bol 36 peut avoir une forme générale de diabolo car il comprend un rétrécissement annulaire 36c entre ses extrémités radialement interne 36d et externe 36e.

L'extrémité radialement externe 36e du bol 36 comprend une surface cylindrique externe 36e1 qui s'étend entre un filetage externe 58 situé du côté de la pale 12 de l'aube 10, et une portée cylindrique 60 située du côté opposé.

Le palier de guidage 48 radialement externe comprend une rangée de billes intercalée entre deux bagues 48a, 48b. La bague interne 48b est montée sur la surface 36e1, et de préférence glissante sur cette surface 36e1. Elle prend appui axialement, directement ou par l'intermédiaire d'une cale annulaire 62, sur la portée 60, et est serrée axialement contre cette portée par un écrou 64 vissé sur le filetage 58.

La bague externe 48a du palier 48 est montée sur une surface cylindrique interne 66 du moyeu 50, et de préférence frettée sur cette surface 66. Cette surface 66 est située à une extrémité radialement externe de l'orifice 50a. La bague 48a prend appui axialement sur une portée cylindrique 68 du moyeu 50 située à l'extrémité radialement interne de la surface 66, directement ou par l'intermédiaire d'une cale annulaire.

Chacune des bagues 48a, 48b du palier 48 comprend un chemin de roulement de la rangée de billes. Le palier 48 est à contact oblique. Dans l'exemple représenté, les points ou surfaces d'appui des billes sur les chemins de roulement des bagues 48a, 48b sont situés sur une surface tronconique qui s'étend le long de l'axe A et dont le plus grand diamètre est situé du côté de l'extrémité libre 28 du pied 14 de l'aube 10.

Le palier de guidage 46 radialement interne comprend deux rangées de billes 70, 72. La bague externe 46a du palier 46 est montée sur une surface cylindrique interne 74 du moyeu 50, et de préférence frettée sur cette surface 74. Cette surface 74 est située à une extrémité radialement interne de l'orifice 50a. La bague 46a prend appui axialement sur une portée cylindrique 76 du moyeu 50 située à l'extrémité radialement externe de la surface 74, directement ou par l'intermédiaire d'une cale annulaire 78. La bague interne 46b du palier 46 comprend deux chemins de roulement respectivement pour les deux rangées de billes 70, 72.

Dans l'exemple représenté, la portée 76 est formée par un rebord annulaire interne 80 du moyeu 50, qui s'étend à l'intérieur de l'orifice 50a sensiblement au niveau du rétrécissement 36c du bol 36.

Ce rebord 80 a un diamètre interne minimal qui définit le diamètre interne minimal de l'orifice 50a et qui est noté D1.

La bague interne 46b du palier 46 est de préférence intégrée dans le bol 36, c'est-à-dire formée d'une seule pièce avec le bol 36. L'extrémité radialement interne 36d du bol 36 comprend ainsi deux chemins de roulement 82, 84 des rangées de billes 70, 72 à sa périphérie externe.

Les rangées de billes 70, 72 du palier 46 ont des diamètres D2, D3 différents. Dans l'exemple représenté, la rangée de billes 72 de plus petit diamètre D3 est intercalée axialement (vis-à-vis de l'axe A) entre la rangée de billes 70 de plus grand diamètre D2 et le palier 48.

On comprend ainsi que le chemin de roulement 84 de la rangée de billes 72 de diamètre D3 a un plus petit diamètre que le chemin de roulement 82 de la rangée de billes 70 de diamètre D2. La rangée de billes 72 de diamètre D3 est située au niveau ou à proximité du rétrécissement 36c du bol 36 et on comprend que l'extrémité radialement interne 36d du bol 36 a un diamètre qui augmente en se rapprochant de l'axe de l'hélice depuis le rétrécissement 36c, ce qui contribue à la forme particulière précitée de diabolo.

Les deux rangées de billes 70, 72 du palier 46 sont à contacts obliques. Dans l'exemple représenté, les points ou surfaces d'appui des billes sur chacun des chemins de roulement 82, 84 sont situés sur une surface tronconique qui s'étend le long de l'axe A et dont le plus grand diamètre est situé du côté du sommet de l'aube 10.

La figure 4a est une vue à plus grande échelle des rangées de billes 70, 72 et la figure 5 montre une cage 82C, 84C de ces rangées de billes 70, 72. Les billes des deux rangées 70, 72 ont de préférence un même diamètre. Le nombre de billes de la rangée de billes 70 peut être supérieur ou égal au nombre de billes de la rangée de billes 72.

La figure 4a montre qu'au moins un plan perpendiculaire P1, P2 à l'axe de calage A passe par les deux rangées de billes 70, 72. Lorsque les extrémités en regard des deux rangées de billes 70, 72 sont situées dans un même et unique plan transversal, on considère que les rangées de billes sont empilées directement l'une sur l'autre. Lorsque les rangées de billes sont engagées axialement l'une dans l'autre (c'est-à-dire imbriquées l'une dans l'autre), elles sont traversées par plusieurs plans P1, P2, comme illustré dans le dessin où la rangée de billes 72 est engagée partiellement à l'intérieur de la rangée de billes 70. Les rangées de billes 70, 72 restent toutefois espacées l'une de l'autre par un jeu J ou entrefer prédéterminé grâce aux contacts obliques et à leurs différences de diamètres.

La cage 82C, 84C de chaque rangée 70, 72 est configurée pour maintenir les billes à intervalles réguliers les unes des autres. La cage 82C, 84C a en section une forme générale tubulaire et comporte une pluralité d'encoches 86 dans chacune desquelles est logée une bille. La cage 82C, 84C est fendue et comprend une fente 88 traversante permettant d'augmenter le diamètre de la cage 82C, 84C et de la rangée de billes 70, 72 lors de son montage. Par ailleurs, dans l'exemple représenté, la cage 82C, 84C comprend un rebord annulaire 90 qui s'étend autour de l'axe A par exemple. Ce rebord 90 est configuré pour coopérer avec un outil de montage de chaque rangée de billes 70, 72. Ce rebord 90 comprend une rangée annulaire d'orifices 92 traversants en direction radiale par rapport à l'axe A. L'outil comprend par exemple des griffes destinées à être engagées dans ces orifices 92.

La figure 4a permet également de constater que les rebords 90 des deux rangées de billes 70, 72 ne sont pas forcément identiques. Le rebord 90 de la rangée de billes 70 a une forme générale cylindrique et s'étend vers l'axe de l'hélice en position de montage. Le rebord 90 de la rangée de billes 72 a une forme générale tronconique ou coudée en section et s'étend également vers l'axe de l'hélice en position de montage. Les formes des rebords sont conçues pour éviter toute interaction avec les bagues 46a, 46b du palier 46 en fonctionnement. On comprend que la forme du rebord 90 de la rangée de billes 72 permet d'éviter une interaction avec la bague interne 46b et le bol 36.

On définit par :
- Dbol_ext le diamètre externe de l'extrémité radialement externe 36e du bol 36, ce diamètre pouvant être défini par la périphérie externe de l'épaulement 60 par exemple,
- Dbol_int le diamètre externe de l'extrémité radialement interne 36d du bol 36,
- Dbague_ext le diamètre interne de la bague interne 48b du palier 48, et
- Dbague_int le diamètre interne de la bague externe 46a du palier 46.

La figure 4 permet de constater que :
- Dbague_ext est supérieur à D1 ; ceci implique que le palier 48 et en particulier sa bague interne 48b doi(ven)t être monté(s) dans l'orifice 50a du moyeu 50 radialement depuis l'extérieur ; la bague externe 48a du palier 48 est également montée dans l'orifice 50a du moyeu 50 radialement depuis l'extérieur ; la bague externe 46b du palier 46 est montée dans l'orifice 50a du moyeu 50 radialement depuis l'intérieur ;
- Dbague_int peut être inférieur ou égal à D1 ; comme visible dans les dessins, ceci permet à la bague externe 46b du palier 46 d'être en saillie à l'intérieur de l'orifice 50a par rapport au rebord 80 ; ceci est avantageux pour faciliter le démontage de la bague 46b au moyen d'un outil d'extraction lors d'une opération de maintenance ; de la même façon, comme illustré, la bague externe 48b du palier 48 peut être en saillie à l'intérieur de l'orifice 50a pour facilite son extraction au moyen d'un outil ;
- Dbol_ext est supérieur à D1 et Dbol_int est inférieur à D1 et inférieur ou égal à Dbague_int ; ceci implique que le bol 36 est monté dans l'orifice 50a du moyeu 50 radialement depuis l'extérieur en engageant l'extrémité radialement interne 36d du bol 36 à travers le rebord 80 de cet orifice 50a ; ceci implique également que, lors du montage, le bol est apte à venir en appui axial sur le rebord 80 du moyeu 50 ; après le montage, cet appui est supprimé pour éviter toute interaction et frottement entre le bol et le moyeu en fonctionnement.

La présente invention concerne également un procédé de montage d'un système 34 tel que décrit dans ce qui précède, qui comprend les étapes de :
a) insertion du bol 36 dans l'orifice 50a du moyeu 50, radialement de l'extérieur vers l'intérieur le long de l'axe A,
b) montage des rangées de billes 70, 72 du palier de guidage 46 entre l'extrémité radialement interne 36d du bol 36 et le moyeu 50, et
c) montage d'au moins une partie du palier de guidage 48 entre l'extrémité radialement externe 36e du bol 36 et le moyeu 50.

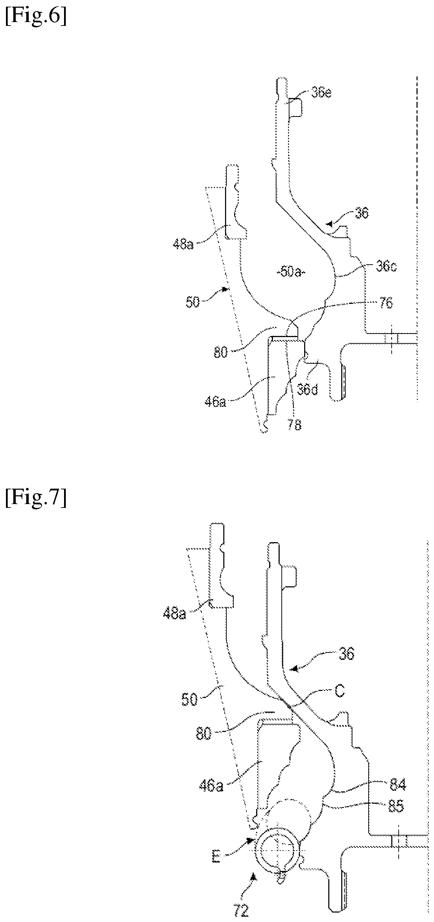

L'étape a) est illustrée à la figure 6. Avant cette étape, comme illustré, le procédé peut comprendre le montage par frettage de la bague externe 46a du palier de guidage 46 dans l'orifice 50a du moyeu 50. La cale 78 peut être intercalée entre la bague externe 46a est la portée 76 pour ajuster le positionnement du bol le long de l'axe A, afin d'optimiser le positionnement de l'aube et minimiser les besoins d'équilibrage de l'hélice. Avant l'étape a), comme illustré, le procédé peut également comprendre le montage par frettage de la bague externe 48a du palier de guidage 48 dans l'orifice 50a du moyeu 50.

Lors de l'étape a), le bol 36 est déplacé dans l'orifice 50a, radialement de l'extérieur vers l'intérieur, de façon à ce que l'extrémité radialement interne 36d du bol 36 se retrouve radialement à l'intérieur de la bague externe 46a du palier 46.

On parvient alors à la configuration de la figure 7 dans laquelle le bol 36 peut venir en appui axial (vis-à-vis de l'axe A) en C sur le rebord interne 80 de l'orifice 50a.

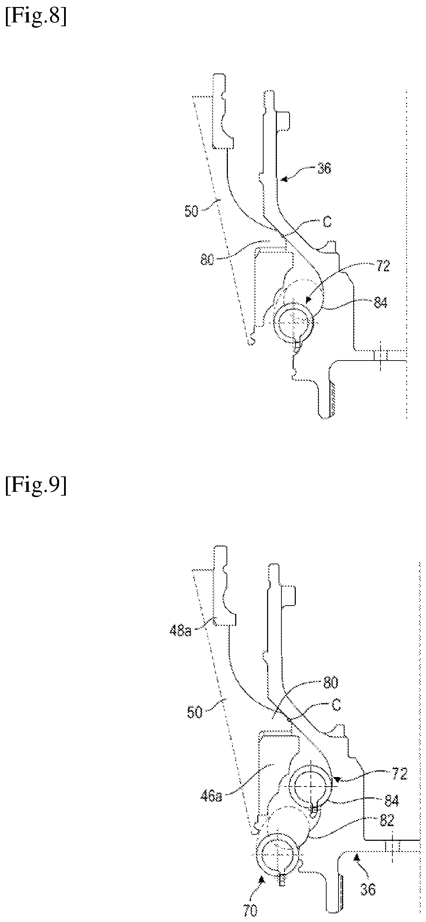

L'espace annulaire E entre l'extrémité radialement interne de l'orifice 50a et l'extrémité radialement interne 36d du bol 36 est suffisant pour autoriser le montage de la rangée de billes 72 de diamètre D3 au moyen de l'outil précité en prise avec le rebord 90 de la cage 84C de cette rangée. Pour cela, le diamètre de la rangée 72 doit être agrandi et la rangée 72 est insérée autour du bol 36 et déplacée radialement de l'intérieur vers l'extérieur jusqu'à ce qu'elle soit montée au niveau du chemin de roulement 84 (figures 7 et 8). La rangée de billes 72 est tout d'abord montée au niveau du chemin de roulement 82.

Avantageusement, les chemins de roulement 82, 84 sont séparés l'un de l'autre par une nervure annulaire 85 visible à la figure 4a. Cette nervure 85 empêche la rangée de billes 72 d'aller directement sur son chemin de roulement 84. Il faut que l'opérateur qui effectue le montage exerce une force de poussée sur la rangée de billes pour passer cette nervure 85, et déplacer la rangée de billes du chemin de roulement 82 jusqu'au chemin de roulement 84.

La nervure 85 est surtout utile lors du démontage, pour que l'opérateur puisse ressentir où se trouvent la rangée de billes lorsqu'il tire à l'aveugle sur cette rangée de billes pour l'extraire, et l'empêcher de repartir involontairement vers le chemin de roulement 84.

Le sommet de cette nervure 85 est de préférence rayonnée pour ne pas endommager la rangée de billes 72 lors du montage/démontage. C'est également de préférence le cas des arêtes annulaires de la bague externe 46a du palier 46.

La rangée de billes 70 de diamètre D2 est montée de la même manière au niveau du chemin de roulement 82, à travers le même espace E (figure 9).

Le bol 36 peut ensuite être déplacé le long de l'axe A depuis l'intérieur vers l'extérieur de façon à ce que les rangées de billes 70, 72 soient logées dans les chemins de roulement de la bague externe 46a du palier 46.

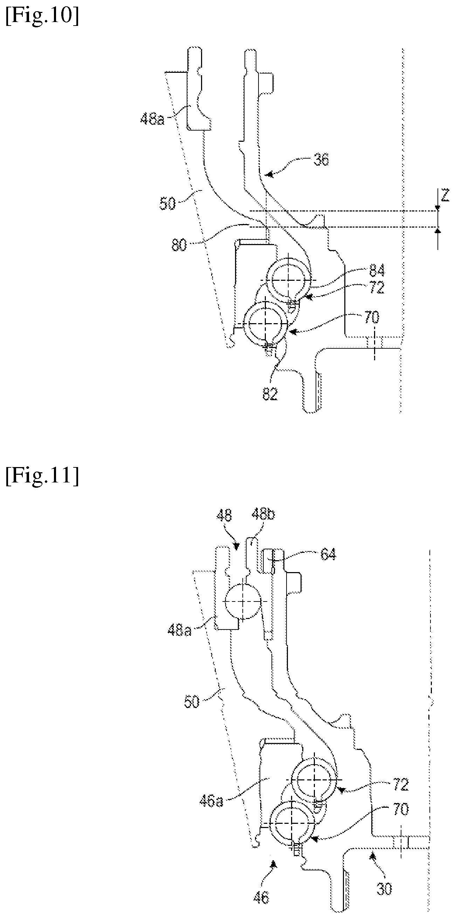

Dans cette position illustrée à la figure 10, le bol 36 est écarté axialement du rebord annulaire 80 du moyeu 50. Cet écartement axial Z représente la « course de montage » du bol 36, le long de l'axe A, qui permet de monter les rangées de billes 70, 72 par l'intérieur du moyeu 50 (cf. figure 10).

Le montage des rangées de billes 70, 72 du palier 46 représente l'étape b). Le procédé comprend ensuite l'étape c) de montage du reste du palier 48 comme illustré à la figure 11.

L'invention permet de remplacer le palier à une seule rangée de billes par un palier à deux rangées de billes ayant une capacité de charge similaire. Comme évoqué dans ce qui précède, le montage du palier à deux rangées de billes nécessite une course de montage qui peut être équivalente à la course de montage du palier à une seule rangée de billes. La course de montage peut donc être maintenue malgré le fait que le palier peut avoir une hauteur ou dimension axiale supérieure du fait de la superposition des deux rangées de billes. Ceci limite finalement l'impact du palier sur le rapport de moyeu de l'hélice.

Les autres avantages de la présente invention sont par exemple :
- la capacité de charge du palier intérieur peut être augmentée (en augmentant par exemple le nombre de billes) sans augmentation de son diamètre,
- la cinématique de montage peut être conservée malgré l'installation d'un palier à double rangée de billes,
- le montage reste relativement simple, essentiellement basé sur une séquence de positionnement relatif des pièces entre elles,
- pas besoin de chauffer les pièces lors de l'assemblage du bol dans l'orifice du moyeu,
- la bague externe du palier intérieur à deux rangées de billes est monobloc, et elle peut être installée par frettage dans l'orifice du moyeu, préalablement au montage des rangées de billes,
- cette bague externe étant monobloc, il n'y a pas nécessairement besoin de la cale de réglage supplémentaire qui serait nécessaire si elle était classiquement en deux parties, pour être sûr que les deux rangées de billes soient bien positionnées et prennent appui toutes les deux sur les deux parties de la bague externe,
- le bol et les paliers peuvent former un ensemble fourni directement par le fabricant des paliers, afin de mieux maîtriser les tolérances géométriques nécessaires au bon fonctionnement de cet ensemble.

## Revendications

1. Hélice pour une turbomachine d'aéronef, cette hélice comportant ;
- un moyeu (50) s'étendant autour d'un premier axe et comportant des orifices (50a) répartis autour de ce premier axe, chacun de ces orifices (50a) ayant une orientation sensiblement radiale par rapport audit premier axe et traversant ledit moyeu,
- un système (34) de commande du calage angulaire d'une aube (10) qui est monté dans chacun desdits orifices (50a), et
- des paliers (46, 48) de guidage du système de commande (34) qui sont montés dans chacun desdits orifices (50a),
ledit système de commande (34) comprenant :
+ une aube (10) comportant une pale (12) reliée à un pied (14), l'aube (10) comportant un axe de calage (A) sensiblement radial par rapport audit premier axe,
+ un bol (36) s'étendant autour dudit axe de calage (A), le bol (36) comportant un logement interne de réception du pied (14) de l'aube (10), et
+ des éléments (40, 41) de fixation et de solidarisation en rotation du pied (14) de l'aube (10) vis-à-vis du bol (36),
lesdits paliers de guidage (46, 48) comprenant :
* un premier palier à billes (48) qui s'étend autour dudit axe de calage (A) et dudit pied (14), entre une extrémité radialement externe (36e) dudit bol (36) et ledit moyeu (50), et
* un second palier à billes (46) qui s'étend autour dudit axe de calage (A) et dudit pied (14), entre une extrémité radialement interne (36d) dudit bol (36) et ledit moyeu (50),
**caractérisé en ce que** ledit second palier à billes (46) comprend deux rangées annulaires de billes (70, 72) qui sont coaxiales et à contacts obliques, une première de ses rangées (70) ayant un premier diamètre (D2) et une seconde de ces rangées (72) ayant un second diamètre (D3) plus petit que le premier diamètre (D2), et **caractérisé en ce qu'** au moins un plan perpendiculaire (P1, P2) audit axe de calage (A) passe par les première et seconde rangées de billes (70, 72).

2. Hélice selon la revendication 1, dans laquelle la seconde rangée de billes (72) est au moins en partie engagée dans la première rangée de billes (70).

3. Hélice selon la revendication 1 ou 2, dans laquelle la seconde rangée de billes (72) est intercalée entre la première rangée de billes (70) et le premier palier à billes (48).

4. Hélice selon l'une des revendications précédentes, dans laquelle le second palier (46) comprend une bague interne (46b) formée d'une seule pièce avec ledit bol (36) et une bague externe (46a) rapportée et fixée dans l'orifice (50a) du moyeu (50), chacune de ces bagues (46a, 46b) comportant un premier chemin de roulement (82) de la première rangée de billes (70) et un second chemin de roulement (84) de la seconde rangée de billes (72).

5. Hélice selon la revendication précédente, dans laquelle ladite bague externe (46a) est montée sur une surface annulaire interne (74) du moyeu (50) et est en appui axial sur une portée cylindrique (76) de ce moyeu (50), directement ou par l'intermédiaire d'une cale annulaire (78).

6. Hélice selon la revendication précédente, dans laquelle ladite bague externe (46a) est formée d'une seule pièce.

7. Hélice selon l'une des revendications précédentes, dans laquelle ledit bol (36) a une forme générale de diabolo et comprend un rétrécissement annulaire (36c) entre lesdites extrémités (36d, 36e).

8. Hélice selon la revendication 7, dans laquelle chacun des orifices (50a) du moyeu (50) comprend un rebord annulaire interne (80) qui est destiné à être situé au niveau dudit rétrécissement (36c) et/ou qui porte ladite portée cylindrique (76), ce rebord interne (80) comportant un diamètre interne (D1) qui correspond au diamètre interne minimal dudit orifice (50a) et qui est supérieur au diamètre externe maximal (Dbol_int) de ladite extrémité radialement interne (36d) du bol (36).

9. Hélice selon la revendication précédente, en dépendance de la revendication 5 ou 6, dans laquelle le diamètre externe maximal (Dbol_int) de ladite extrémité radialement interne (36d) du bol (36) est inférieur ou égal au diamètre interne minimal (Dbague_int) de ladite bague externe (46a).

10. Hélice selon l'une des revendications précédentes, dans laquelle les billes desdites première et seconde rangées de billes (70, 72) ont des diamètres identiques.

11. Hélice selon l'une des revendications précédentes, dans laquelle les billes de chacune desdites première et seconde rangées de billes (70, 72) sont maintenues par une cage annulaire (82C, 84C) qui comprend un rebord annulaire (90) configuré pour être mis en prise avec un outil de montage de la rangée de billes.

12. Hélice selon la revendication précédente, dans laquelle le rebord annulaire (90) comprend une rangée annulaire d'orifices (92) traversants.

13. Hélice selon l'une des revendications précédentes, dans laquelle ledit bol (36) comporte une paroi annulaire (36a) comportant une extrémité radialement interne fermée par une paroi de fond (36b), et une extrémité radialement externe ouverte et configurée pour autoriser le montage du pied (14) de l'aube (10) à l'intérieur du bol (36), la paroi de fond (36b) comprenant un évidement (52) ayant une section transversale non circulaire et configuré pour recevoir une extrémité libre (28) de forme complémentaire dudit pied (14) de façon à ce que le bol (36) soit solidarisé en rotation avec le pied (14) autour dudit axe (A).

14. Turbomachine, en particulier d'aéronef, comportant au moins une hélice selon l'une des précédentes.

15. Procédé de montage d'une hélice selon l'une des revendications 1 à 13, dans lequel il comprend les étapes de :
a) insertion du bol (36) dans l'orifice (50a) du moyeu, radialement de l'extérieur vers l'intérieur par rapport audit premier axe,
b) montage des première et seconde rangées annulaires de billes (70, 72) du second palier de guidage (46) entre l'extrémité radialement interne (36e) du bol (36) et le moyeu (50), et
c) montage d'au moins une partie du premier palier de guidage (48) entre l'extrémité radialement externe (36e) du bol (36) et le moyeu (50).

16. Procédé selon la revendication 15, dans lequel il comprend, avant l'étape a), le montage par frettage d'une bague externe (46a) du second palier de guidage (46) dans l'orifice (50a) du moyeu (50).

17. Procédé selon la revendication 15 ou 16, dans lequel les rangées de billes (70, 72) du second palier de guidage (46) sont montées les unes après les autres à l'étape a), au moyen d'un outil de montage qui est mis en prise avec chacune de ces rangées.

18. Procédé selon l'une des revendications 15 à 17, dans lequel une bague externe (48a) du premier palier de guidage (48) est montée dans l'orifice (50a) du moyeu (50) avant l'étape a) puis des billes et une bague interne (48b) de ce palier (48) sont montées entre l'extrémité radialement externe (36e) du bol (36) et le moyeu (50) lors de l'étape c).

## Patentansprüche

1. Propeller für ein Turbotriebwerk eines Luftfahrzeugs, wobei dieser Propeller umfasst:
- eine Nabe (50), die sich um eine erste Achse herum erstreckt und Öffnungen (50a) umfasst, die um diese erste Achse herum verteilt sind, wobei jede dieser Öffnungen (50a) eine in Bezug auf die erste Achse im Wesentlichen radiale Ausrichtung aufweist und durch die Nabe hindurchgeht,
- ein System (34) zum Steuern der Winkelfeststellposition einer Schaufel (10), das in jeder der Öffnungen (50a) montiert ist, und
- Lager (46, 48) zum Führen des Steuersystems (34), die in jeder der Öffnungen (50a) montiert sind,
wobei das Steuersystem (34) umfasst:
- eine Schaufel (10), die ein Blatt (12) umfasst, das mit einem Fuß (14) verbunden ist, wobei die Schaufel (10) eine in Bezug auf die erste Achse im Wesentlichen radiale Feststellpositionachse (A) umfasst,
- eine Schale (36), die sich um die Feststellpositionachse (A) herum erstreckt, wobei die Schale (36) ein inneres Gehäuse zum Aufnehmen des Fußes (14) der Schaufel (10) umfasst, und
- Elemente (40, 41) zum Befestigen und drehfesten Verbinden des Fußes (14) der Schaufel (10) in Bezug auf die Schale (36),
wobei die Führungslager (46, 48) umfassen:
- ein erstes Kugellager (48), das sich um die Feststellpositionachse (A) und den Fuß (14) herum erstreckt, zwischen einem radial äußeren Ende (36e) der Schale (36) und der Nabe (50), und
- ein zweites Kugellager (46), das sich um die Feststellpositionachse (A) und den Fuß (14) herum erstreckt, zwischen einem radial inneren Ende (36d) der Schale (36) und der Nabe (50),
**dadurch gekennzeichnet, dass** das zweite Kugellager (46) zwei ringförmige Kugelreihen (70, 72) umfasst, die koaxial sind und schräge Kontakte aufweisen, wobei eine erste seiner Reihen (70) einen ersten Durchmesser (D2) aufweist, und eine zweite dieser Reihen (72) einen zweiten Durchmesser (D3) aufweist, der kleiner ist als der erste Durchmesser (D2), und **dadurch gekennzeichnet, dass** mindestens eine senkrechte Ebene (P1, P2) zur Feststellpositionachse (A) durch die erste und die zweite Kugelreihe (70, 72) verläuft.

2. Propeller nach Anspruch 1, wobei die zweite Kugelreihe (72) mindestens zum Teil in die erste Kugelreihe (70) eingerückt ist.

3. Propeller nach Anspruch 1 oder 2, wobei die zweite Kugelreihe (72) zwischen der ersten Kugelreihe (70) und dem ersten Kugellager (48) eingefügt ist.

4. Propeller nach einem der vorstehenden Ansprüche, wobei das zweite Lager (46) einen Innenring (46b), der einstückig mit der Schale (36) gebildet ist, und einen Außenring (46a) umfasst, der in der Öffnung (50a) der Nabe (50) angebracht und befestigt ist, wobei jeder dieser Ringe (46a, 46b) eine erste Laufbahn (82) der ersten Kugelreihe (70) und eine zweite Laufbahn (84) der zweiten Kugelreihe (72) umfasst.

5. Propeller nach dem vorstehenden Anspruch, wobei der Außenring (46a) an einer ringförmigen Innenfläche (74) der Nabe (50) montiert ist und, direkt oder mittels eines ringförmigen Keils (78), axial auf einem zylindrischen Umfang (76) dieser Nabe (50) aufliegt.

6. Propeller nach dem vorstehenden Anspruch, wobei der Außenring (46a) einstückig gebildet ist.

7. Propeller nach einem der vorstehenden Ansprüche, wobei die Schale (36) eine allgemeine Diabolo-Form aufweist und zwischen den Enden (36d, 36e) eine ringförmige Einschnürung (36c) umfasst.

8. Propeller nach Anspruch 7, wobei jede der Öffnungen (50a) der Nabe (50) einen ringförmigen Innenrand (80) umfasst, der dazu bestimmt ist, sich an der Einschnürung (36c) zu befinden und/oder der den zylindrischen Umfang (76) trägt, wobei dieser Innenrand (80) einen Innendurchmesser (D1) umfasst, der dem minimalen Innendurchmesser der Öffnung (50a) entspricht und der größer ist als der maximale Außendurchmesser (Dbol_int) des radial inneren Endes (36d) der Schale (36).

9. Propeller nach dem vorstehenden Anspruch, in Abhängigkeit von Anspruch 5 oder 6, wobei der maximale Außendurchmesser (Dbol_int) des radial inneren Endes (36d) der Schale (36) kleiner oder gleich dem minimalen Innendurchmesser (Dbague_int) des Außenrings (46a) ist.

10. Propeller nach einem der vorstehenden Ansprüche, wobei die Kugeln der ersten und der zweiten Kugelreihe (70, 72) identische Durchmesser aufweisen.

11. Propeller nach einem der vorstehenden Ansprüche, wobei die Kugeln jeder der ersten und der zweiten Kugelreihe (70, 72) von einem ringförmigen Käfig (82C, 84C) gehalten werden, der einen ringförmigen Rand (90) umfasst, der dafür konfiguriert ist, mit einem Werkzeug zum Montieren der Kugelreihe in Eingriff gebracht zu werden.

12. Propeller nach dem vorstehenden Anspruch, wobei der ringförmige Rand (90) eine ringförmige Reihe von Durchgangsöffnungen (92) umfasst.

13. Propeller nach einem der vorstehenden Ansprüche, wobei die Schale (36) eine ringförmige Wand (36a) umfasst, die ein radial inneres Ende umfasst, das durch eine Bodenwand (36b) geschlossen ist, und ein radial äußeres Ende, das offen und konfiguriert ist, um die Montage des Fußes (14) der Schaufel (10) im Inneren der Schale (36) zu ermöglichen, wobei die Bodenwand (36b) eine Aussparung (52) umfasst, die einen nicht kreisförmigen Querschnitt aufweist und konfiguriert ist, um ein freies Ende (28) mit komplementärer Form des Fußes (14) derart aufzunehmen, dass die Schale (36) um die Achse (A) herum drehfest mit dem Fuß (14) verbunden wird.

14. Turbotriebwerk, insbesondere eines Luftfahrzeugs, das mindestens einen Propeller nach einem der vorstehenden Ansprüche umfasst.

15. Verfahren zum Montieren eines Propellers nach einem der Ansprüche 1 bis 13, wobei es die folgenden Schritte umfasst:
a) Einsetzen der Schale (36) in die Öffnung (50a) der Nabe, radial von außen nach innen in Bezug auf die erste Achse,
b) Montieren der ersten und der zweiten ringförmigen Kugelreihe (70, 72) des zweiten Führungslagers (46) zwischen dem radial inneren Ende (36e) der Schale (36) und der Nabe (50), und
c) Montieren mindestens eines Teils des ersten Führungslagers (48) zwischen dem radial äußeren Ende (36e) der Schale (36) und der Nabe (50).

16. Verfahren nach Anspruch 15, wobei es vor Schritt a) das Montieren eines Außenrings (46a) des zweiten Führungslagers (46) durch Aufschrumpfen in der Öffnung (50a) der Nabe (50) umfasst.

17. Verfahren nach Anspruch 15 oder 16, wobei die Kugelreihen (70, 72) des zweiten Führungslagers (46) in Schritt a) nacheinander mittels eines Montagewerkzeugs montiert werden, das mit jeder dieser Reihen in Eingriff gebracht wird.

18. Verfahren nach einem der Ansprüche 15 bis 17, wobei vor Schritt a) ein Außenring (48a) des ersten Führungslagers (48) in der Öffnung (50a) der Nabe (50) montiert wird, und dann in Schritt c) Kugeln und ein Innenring (48b) dieses Lagers (48) zwischen dem radial äußeren Ende (36e) der Schale (36) und der Nabe (50) montiert werden.

## Claims

1. A propeller for an aircraft turbomachine, this propeller comprising;
- a hub (50) extending around a first axis and comprising openings (50a) distributed around this first axis, each of these openings (50a) having a substantially radial orientation with respect to said first axis and passing through said hub,
- a system (34) for controlling the angular pitch of a vane (10) which is mounted in each of said openings (50a), and
- guide bearings (46, 48) for guiding the control system (34), which are mounted in each of said openings (50a),
said control system (34) comprising:
- a vane (10) comprising a blade (12) connected to a root (14), the vane (10) comprising a pitch axis (A) substantially radial with respect to said first axis,
- a bowl (36) extending around said pitch axis (A), the bowl (36) comprising an inner housing for receiving the root (14) of the vane (10), and
- elements (40, 41) for attaching and securing the root (14) of the vane (10) against rotation with respect to the bowl (36),
said guide bearings (46, 48) comprising:
- a first ball bearing (48) extending around said pitch axis (A) and said root (14), between a radially external end (36e) of said bowl (36) and said hub (50), and
- a second ball bearing (46) which extends around said pitch axis (A) and said root (14), between a radially internal end (36d) of said bowl (36) and said hub (50),
**characterised in that** said second ball bearing (46) comprises two annular rows of balls (70, 72) which are coaxial and with angular contact, a first of these rows (70) having a first diameter (D2) and a second of these rows (72) having a second diameter (D3) smaller than the first diameter (D2), and **characterised in that** at least one plane (P1, P2) perpendicular to said pitch axis (A) passes through the first and second rows of balls (70, 72).

2. The propeller according to claim 1, wherein the second row of balls (72) is at least partially engaged in the first row of balls (70).

3. The propeller as claimed in claim 1 or 2, wherein the second row of balls (72) is interposed between the first row of balls (70) and the first ball bearing (48).

4. The propeller according to one of the preceding claims, wherein the second bearing (46) comprises an internal ring (46b) formed in one-part with said bowl (36) and an external ring (46a) fitted and attached in the opening (50a) of the hub (50), each of these rings (46a, 46b) comprising a first raceway (82) of the first row of balls (70) and a second raceway (84) of the second row of balls (72).

5. The propeller according to the preceding claim, wherein said external ring (46a) is mounted on an internal annular surface (74) of the hub (50) and rests axially on a cylindrical bearing surface (76) of this hub (50), directly or by means of an annular wedge (78).

6. The propeller according to the preceding claim, wherein said external ring (46a) is formed in one-part.

7. The propeller according to any of the preceding claims, wherein said bowl (36) is generally diabolo-shaped and comprises an annular constriction (36c) between said ends (36d, 36e).

8. The propeller according to claim 7, wherein each of the openings (50a) of the hub (50) comprises an internal annular rim (80) which is intended to be located at the level of said constriction (36c) and/or which carries said cylindrical bearing surface (76), this internal rim (80) comprising an internal diameter (D1) which corresponds to the minimum internal diameter of said opening (50a) and which is greater than the maximum external diameter (Dbol_int) of said radially internal end (36d) of the bowl (36).

9. The propeller as claimed above, in dependence on claim 5 or 6, wherein the maximum external diameter (Dbol_int) of said radially internal end (36d) of the bowl (36) is less than or equal to the minimum internal diameter (Dbague_int) of said external ring (46a).

10. The propeller according to one of the preceding claims, wherein the balls of said first and second rows of balls (70, 72) have identical diameters.

11. The propeller according to any of the preceding claims, wherein the balls of each of said first and second rows of balls (70, 72) are held by an annular cage (82C, 84C) which comprises an annular rim (90) configured to be engaged by a ball row mounting tool.

12. The propeller according to the preceding claim, wherein the annular rim (90) comprises an annular row of through openings (92).

13. The propeller according to any of the preceding claims, wherein said bowl (36) comprises an annular wall (36a) comprising a radially internal end closed by a bottom wall (36b), and a radially external end open and configured to allow mounting the root (14) of the vane (10) within the bowl (36), the bottom wall (36b) comprising a recess (52) having a non-circular cross-section and configured to receive a free end (28) of complementary shape to said root (14) so that the bowl (36) is secured in rotation to the root (14) about said axis (A).

14. A turbomachine, in particular for an aircraft, comprising at least one propeller according to one of the above.

15. A method for mounting a propeller according to one of claims 1 to 13, wherein it comprises the steps of:
a) inserting the bowl (36) into the opening (50a) of the hub, radially from the outside towards the inside with respect to said first axis,
b) mounting the first and second annular rows of balls (70, 72) of the second guide bearing (46) between the radially internal end (36e) of the bowl (36) and the hub (50), and
c) mounting at least one portion of the first guide bearing (48) between the radially external end (36e) of the bowl (36) and the hub (50).

16. The method according to claim 15, wherein it comprises, prior to step a), shrink-fitting an external ring (46a) of the second guide bearing (46) into the opening (50a) of the hub (50).

17. The method according to claim 15 or 16, wherein the rows of balls (70, 72) of the second guide bearing (46) are mounted one after the other in step a), by means of a mounting tool which is brought into engagement with each of these rows.

18. The method according to one of claims 15 to 17, wherein an external ring (48a) of the first guide bearing (48) is mounted in the opening (50a) of the hub (50) before step a) and then balls and an internal ring (48b) of this bearing (48) are mounted between the radially external end (36e) of the bowl (36) and the hub (50) in step c).
